# EUROPÄISCHE PATENTSCHRIFT

(11) **EP 3 084 869 B1**
(45) Veröffentlichungstag und Bekanntmachung des Hinweises auf die Patenterteilung: **12.02.2020**
(21) Anmeldenummer: 14824371.0
(22) Anmeldetag: 15.12.2014
(51) Int. Cl.: H01M 8/04089, H01M 8/0612, H01M 8/124

(54) **GASKREISLAUF FÜR EIN FESTOXIDBRENNSTOFFZELLEN-SYSTEM UND FESTOXIDBRENNSTOFFZELLEN-SYSTEM**
GAS CIRCUIT FOR A SOLID OXIDE FUEL CELL SYSTEM AND A SOLID OXIDE FUEL CELL SYSTEM
CIRCUIT DE GAZ POUR SYSTÈME DE PILE À COMBUSTIBLE À OXYDE SOLIDE ET SYSTÈME DE PILE À COMBUSTIBLE À OXYDE SOLIDE

(30) Priorität: 17.12.2013 DE 102013226327
(43) Veröffentlichungstag der Anmeldung: 26.10.2016
(73) Patentinhaber: thyssenkrupp Marine Systems GmbH, 24143 Kiel (DE)
(72) Erfinder: NEHTER, Pedro, 24226 Heikendorf (DE)
(74) Vertreter: thyssenkrupp Intellectual Property GmbH
(86) Internationale Anmeldenummer: PCT/EP2014/003350
(87) Internationale Veröffentlichungsnummer: WO 2015/090549

(56) Entgegenhaltungen:
- EP-A1- 1 571 726
- WO-A2-2013/087378
- JP-A- 2006 100 223

## Beschreibung

Die Erfindung betrifft einen Gaskreislauf für ein Festoxidbrennstoffzellen-System gemäß dem Oberbegriff des Anspruchs 1 sowie ein Festoxidbrennstoffzellen-System mit zumindest einer Festoxidbrennstoffzelle.

Festoxidbrennstoffzellen (Solid Oxide Fuel Cell, SOFC) können als Hochtemperatur- oder auch Niedertemperatur-Brennstoffzellen ausgestaltet sein und werden entsprechend ihrer Bauart im Wesentlichen in röhrenförmige und planare Festoxidbrennstoffzellen unterteilt. Planare Festoxidbrennstoffzellen eignen sich vor allem für Anwendungen mit hohen volumetrischen Leistungsdichten. Jedoch können die Zuverlässigkeit und die Lebensdauer von planaren Festoxidbrennstoffzellen bei hohen Druckdifferenzen zwischen der Luftseite (Kathode) und der Umgebung sowie zwischen der Brennseite (Anode) und der Luftseite, welche beispielsweise durch stromabwärts geschaltete Wärmeübertrager entstehen können, stark beeinträchtigt werden.

Bei der Nutzung kohlenwasserstoffhaltiger Brennstoffe, wie beispielsweise Erdgas, LPG, Diesel oder Kerosin ist eine Aufbereitung des Brenngases notwendig, um Kohlenstoffabscheidungen innerhalb der Festoxidbrennstoffzelle zu vermeiden. Die Dampfreformierung ist neben der partiellen Oxidation und der autothermen Reformierung dabei das Aufbereitungsverfahren mit dem höchsten Wirkungspotential. Hierbei sind neben dem Wasserdampf, der für die eigentliche Reformierung des Brennstoffes bereitgestellt werden muss, Gase wie Wasserstoff, Kohlenmonoxid und Kohlendioxid von Vorteil, die Methan über eine exotherme Reaktion innerhalb des Reformers generieren können. Da das Reformat üblicherweise nicht vollständig in der Festoxidbrennstoffzelle oxidiert wird, ist es im Stand der Technik bekannt, das aus der Anode austretende Gas in einem Gaskreislauf zurück zum Reformer zu rezirkulieren, um die oben genannten Gase Wasserstoff, Kohlenmonoxid und Kohlendioxid, die den Aufbereitungsprozess unterstützen, bereitzustellen.

Typischerweise wird zur Rezirkulation des Anodengases im Gaskreislauf ein Gebläse oder ein Ejektor eingesetzt, welches/welcher von dem Rezirkulat oder einem Gemisch aus Rezirkulat und primärem Brennstoff durchströmt wird.

Beispielsweise offenbart EP 1 603 181 A2 ein Festoxidbrennstoffzellen-System, bei welchem die Aufteilung des Anodengasstromes vor dem Gebläse durchgeführt wird.

In US 2008/0057361 wird weiterhin eine Anordnung beschrieben, bei welcher sich das Rezirkulationsgebläse der Luftseite im Strang des Rezirkulats und somit ebenfalls hinter der Aufteilung des Anodengasstroms in einen Restgasstrom und einen Rezirkulationsstrom befindet.

Bei diesen aus dem Stand der Technik bekannten SOFC-Systemkonfigurationen stellt sich das Druckniveau der Anode jedoch entsprechend hoch über die Druckverluste der stromabwärts angeordneten Komponenten des Restgasstroms ein. Dabei kann der Gasdruck an der Anode ein derart hohes Niveau erreichen, dass es zu Schädigungen oder einem Versagen der Brennstoffzelle kommen kann.

Die EP 1 571 726 A1 beschreibt eine Anordnung, bei der ein Gebläse vor der Aufteilung des Anodengasstroms in einen Restgasstrom und einen Rezirkulationsstrom angeordnet ist. Es wird ein Rückführungsgrad des Anodengases so eingestellt, dass der Sauerstoff, der für die endotherme Reformierung benötigt wird, aus dem Wasser und dem Kohlendioxid des rückgeführten Anodengases geholt werden kann.

Daher ist es eine Aufgabe der vorliegenden Erfindung, einen Gaskreislauf für ein Festoxidbrennstoffzellen-System sowie ein Festoxidbrennstoffzellen-System bereitzustellen, gemäß welchen eine Rezirkulation ermöglicht wird, ohne dass der Druck im Gasraum der Anode übermäßig erhöht wird.

Diese Aufgabe wird durch einen Gaskreislauf für ein Festoxidbrennstoffzellen-System mit den Merkmalen gemäß Anspruch 1 sowie durch ein Festoxidbrennstoffzellen-System mit den Merkmalen gemäß Anspruch 10 gelöst. Vorteilhafte Weiterbildungen der Erfindung ergeben sich aus den Unteransprüchen, der Beschreibung sowie der Zeichnung. Hierbei können die in den Unteransprüchen und der Beschreibung angegebenen Merkmale jeweils für sich, aber auch in geeigneter Kombination die erfindungsgemäße Lösung weiter ausgestalten.

Erfindungsgemäß wird demnach ein Gaskreislauf für ein Festoxidbrennstoffzellen-System bereitgestellt, welcher einen Anodengasabschnitt, in welchem aus einem Gasraum einer Anode der Festoxidbrennstoffzelle austretendes Anodengas fließt, und einen Rezirkulationsabschnitt zum Rezirkulieren zumindest eines Teils des Anodengases zurück zu einer in dem Gaskreislauf angeordneten Brenngasaufbereitungseinrichtung, in welcher Brennstoff für die Festoxidbrennstoffzelle zu Brenngas aufbereitet wird, aufweist, wobei in dem Gaskreislauf eine Gasfördereinrichtung zum Rezirkulieren des Anodengases, und eine Aufteilungseinrichtung, die das Anodengas in einen Rezirkulationsstrom und einen aus dem Gaskreislauf abzuleitenden Restgasstrom aufteilt, angeordnet sind, wobei die Fördereinrichtung stromaufwärts der Aufteilungseinrichtung in dem Anodengasabschnitt angeordnet ist, wobei dem Rezirkulationsstrom in dem Rezirkulationsabschnitt ein weiteres Medium, wie Wasser oder Wasserdampf, über eine in den Rezirkulationsabschnitt mündende Leitung mittels eines Ejektors, einer Düse oder eines Strahlwäschers zugeführt wird.

Grundgedanke der vorliegenden Erfindung ist es, die Fördereinrichtung stromaufwärts der Aufteilungseinrichtung in dem Anodengasabschnitt anzuordnen. Durch die Aufteilung des Anodengasstroms erst hinter der Fördereinrichtung wird die Fördereinrichtung von dem gesamten aus dem Anodengasraum austretenden Gas durchströmt. Dabei kann das Druckniveau in dem Gasraum der Anode trotz hoher Druckverluste im Restgasstrom niedrig gehalten werden. Die Leistungsaufnahme der Fördereinrichtung wird dabei gegenüber der üblichen, aus dem Stand der Technik bekannten Anodengasrezirkulation höher sein, da sich der Volumenstrom verdoppeln kann. Dies macht sich im elektrischen Wirkungsgrad jedoch lediglich mit einer Abnahme von maximal 1 % bemerkbar.

Gemäß einer bevorzugten Ausführungsform ist die Gasfördereinrichtung ein Gebläse.

Gemäß einer alternativen bevorzugten Ausführungsform kann die Gasfördereinrichtung auch ein Ejektor sein.

Vorzugsweise umfasst die Brenngasaufbereitungseinrichtung einen Reformer, in welchem die Aufbereitung des Brenngases durchgeführt wird.

Darüber hinaus ist es vorteilhaft, wenn die Brenngasaufbereitungseinrichtung zum Durchführen der Brenngasaufbereitung bei unterschiedlichen Temperaturen, bei unterschiedlichem Drücken und/oder mit unterschiedlichen Katalysatoren ausgelegt ist.

Weiterhin kann die Brenngasaufbereitungseinrichtung Einrichtungen zum Durchführen einer partiellen Oxidation, einer autothermen Reformierung oder einer Wasserdampfreformierung aufweisen.

Gemäß einer bevorzugten Ausführungsform weist die Brenngasaufbereitungseinrichtung eine Entschwefelungseinrichtung auf, so dass auch schwefelhaltige Brennstoffe verwendet werden können.

Vorteilhaft ist auch, wenn der Restgasstrom einem Restgasbrenner zum Oxidieren des Restgases mit Luft oder Sauerstoff zuführbar ist.

Vorzugsweise weist der Gaskreislauf weiterhin einen Brenngasabschnitt auf, welcher von der Brenngaseinrichtung zum Gasraum der Anode führt.

Erfindungsgemäß wird weiterhin ein Festoxidbrennstoffzellen-System bereitgestellt, welches zumindest eine Festoxidbrennstoffzelle und einen Gaskreislauf, wie oben ausgeführt, umfasst. Das erfindungsgemäße Festoxidbrennstoffzellen-System, welches mit einem wie oben beschriebenen Gaskreislauf ausgestattet ist, weist den Vorteil einer großen Zuverlässigkeit und einer langen Lebensdauer auf, da große Druckdifferenzen bzw. ein übermäßiger Druckanstieg im Gasraum der Anode vermieden werden.

Die Erfindung ist nachfolgend anhand eines in der Zeichnung dargestellten Ausführungsbeispiels näher erläutert. Es zeigen:
- Fig. 1: den schematischen Aufbau eines Festoxidbrennstoffzellen-Systems gemäß einer ersten nicht erfindungsgemäßen Ausführungsform;
- Fig. 2: den schematischen Aufbau eines Festoxidbrennstoffzellen-Systems gemäß einer zweiten nicht erfindungsgemäßen Ausführungsform;
- Fig. 3: den schematischen Aufbau eines Festoxidbrennstoffzellen-Systems gemäß einer erfindungsgemäßen Ausführungsform; und
- Fig. 4: den schematischen Aufbau eines Festoxidbrennstoffzellen-Systems gemäß einer weiteren nicht erfindungsgemäßen Ausführungsform.

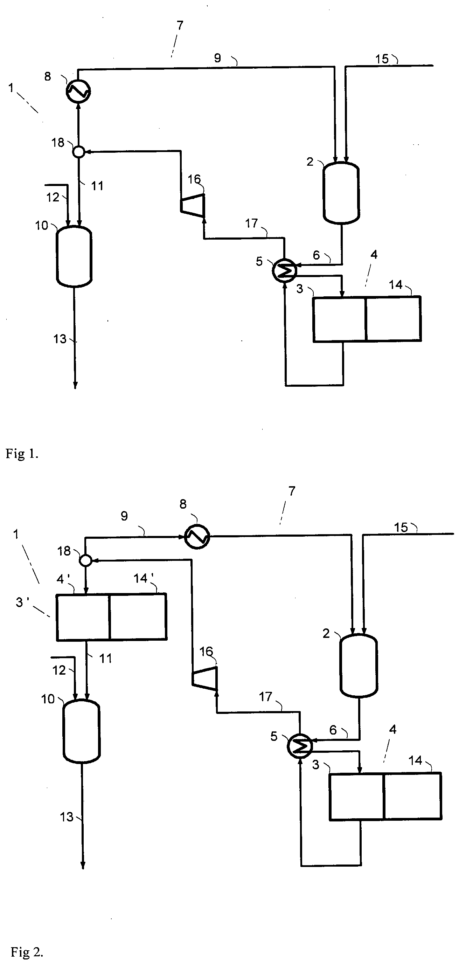

Fig. 1 zeigt den schematischen Aufbau eines Festoxidbrennstoffzellen-Systems 1 mit dem Gaskreislauf gemäß einer nicht erfindungsgemäßen Ausführungsform, welches beispielsweise mit kohlenwasserstoffhaltigen Brennstoffen, wie Erdgas, LPG, Diesel, Benzin, Kerosin, Methanol oder Ethanol bei einer Betriebstemperatur zwischen 500 °C und 900 °C betrieben werden kann. Das Festoxidbrennstoffzellen-System 1 weist eine Brenngasaufbereitungseinrichtung 2 in Form eines Reformers auf, welcher mit einer Anode 3 einer Festoxidbrennstoffzelle 4 über einen Brenngasabschnitt 6 des Gaskreislaufs 7 gekoppelt ist. Die Brenngasaufbereitungseinrichtung 2 ist ausgelegt, um bei Temperaturen von 250 °C bis 1000 °C beheizt, gekühlt oder adiabat zu arbeiten. Über einen Brennstoffabschnitt 15 wird der Brenngasaufbereitungseinrichtung 2 Brennstoff zur Aufbereitung zugeführt.

Die Festoxidbrennstoffzelle 4 kann als Nieder- oder Hochtemperaturbrennstoffzelle ausgelegt sein, die protonen- oder sauerstoffleitend ist. Weiterhin kann die Festoxidbrennstoffzelle 4 gasseitig aus mehreren in Reihe oder parallel geschalteten Zellen oder Zellstapeln, welche hier nicht im Detail dargestellt sind, bestehen. Getrennt von der Anode 3 durch einen festen, beispielsweise keramischen, Elektrolyten, ist neben der Anode 3 die Kathode 14 der Festoxidbrennstoffzelle 4 angeordnet.

Das Festoxidbrennstoffzellen-System 1 weist ferner einen Wärmeübertrager 5 auf, durch welchen von der Brenngasaufbereitungseinrichtung 2 aufbereitetes Brenngas in dem Brenngasabschnitt 6 des Gaskreislaufs 7 des Festoxidbrennstoffzellen-Systems 1 auf dem Weg zu der Anode 3 hindurchgeleitet wird, und einen weiteren Wärmeübertrager 8, welcher in einem Rezirkulationsabschnitt 9 des Gaskreislaufs 7, in welchem Rezirkulat fließt, angeordnet ist, und welcher das Gas auf die erforderliche Eintrittstemperatur des Reformers 2 und der Festoxidbrennstoffe 4 bringt.

Weiterhin umfasst das Festoxidbrennstoffzellen-System 1 eine Oxidationseinheit 10 mit einem Restgasbrenner. Die Oxidationseinheit 10 ist in einem Restgasabschnitt 11 angeordnet, in welchem aus dem Gaskreislauf 7 abzuleitendes Restgas fließt. Das Restgas wird der Oxidationseinheit 10 zusammen mit Luft 12 zugeführt, um das Restgas zu oxidieren und als Abgas 13 aus der Oxidationseinheit 10 auszutreten.

Um einen Druckanstieg im Gasraum der Anode 3 zu vermeiden, ist eine Gasfördereinrichtung 16, welche hier als Gebläse ausgebildet ist und welche zum Rezirkulieren eines Teils des Anodengases, welches aus der Anode 3 austritt, dient, in einem Anodengasabschnitt 17 angeordnet, so dass die Gasfördereinrichtung 16 von dem gesamten Anodengas durchströmt wird. Stromabwärts der Gasfördereinrichtung 16 ist eine Aufteilungseinrichtung 18, beispielsweise als Ventil ausgebildet, angeordnet, welche das Anodengas in einen Rezirkulationsstrom, welcher in dem Rezirkulationsabschnitt 9 fließt, und einen aus dem Gaskreislauf abzuleitenden Restgasstrom, welcher in dem Restgasabschnitt 11 fließt, aufteilt.

Fig. 2 zeigt den schematischen Aufbau eines Festoxidbrennstoffzellen-Systems 1 gemäß einer zweiten nicht erfindungsgemäßen Ausführungsform, welche sich von der in Fig. 1 dargestellten Ausführungsform dadurch unterscheidet, dass in dem Restgasabschnitt 11 stromaufwärts der Oxidationseinheit 10 und stromabwärts der Aufteilungseinrichtung 18 eine weitere Festoxidbrennstoffzelle 4' angeordnet ist. Es können auch mehr als eine weitere Festoxidbrennstoffzelle in diesem Abschnitt angeordnet werden. Durch das Vorsehen von einer oder mehreren zusätzlichen Festoxidbrennstoffzellen 4' in dem Restgasabschnitt 11 wird der Brennstoffumsatz erhöht.

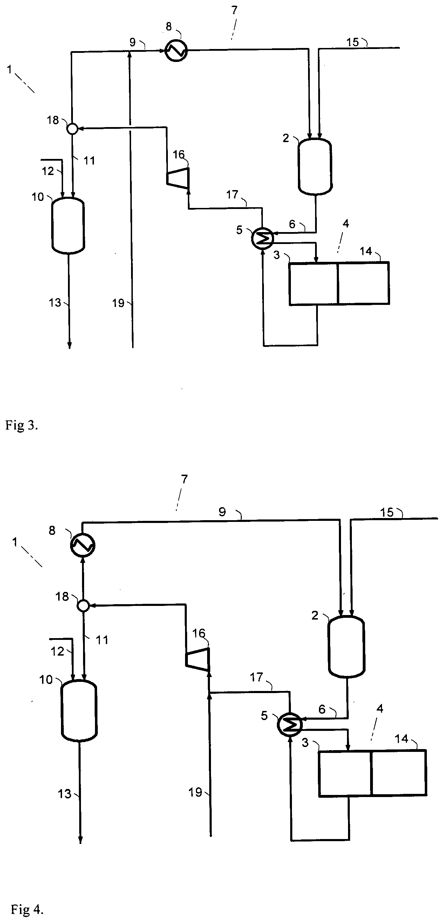

Fig. 3 zeigt den schematischen Aufbau eines Festoxidbrennstoffzellen-Systems 1 gemäß einer erfindungsgemäßen Ausführungsform, welche sich von der in Fig. 1 dargestellten Ausführungsform dadurch unterscheidet, dass dem Rezirkulationsstrom in dem Rezirkulationsabschnitt 9 ein weiteres Medium, wie beispielsweise Wasser oder Wasserdampf, über eine in den Rezirkulationsabschnitt 9 mündende Leitung 19 mittels eines hier nicht dargestellten Ejektors, einer Düse oder eines Strahlwäschers zugeführt wird.

Fig. 4 zeigt den schematischen Aufbau eines Festoxidbrennstoffzellen-Systems 1 gemäß einer weiteren nicht erfindungsgemäßen Ausführungsform, welches sich von der in Fig. 3 dargestellten Ausführungsform dadurch unterschiedet, dass das weitere Medium, wie z. B. Wasser oder Wasserdampf, hier bereits in den Anodengasabschnitt 17, d. h. stromabwärts der Anode 3 und stromaufwärts der Gasfördereinrichtung 16, eingeleitet wird.

### Bezugszeichenliste

- 1: - Festoxidbrennstoffzellen-System
- 2: - Brenngasaufbereitung (Reformer)
- 3, 3': - Anode der Festoxidbrennstoffzelle
- 4, 4': - Festoxidbrennstoffzelle
- 5: - Wärmeübertrager
- 6: - Brenngasabschnitt
- 7: - Gaskreislauf
- 8: - Wärmeübertrager
- 9: - Rezirkulationsabschnitt
- 10: - Oxidationseinheit
- 11: - Restgasabschnitt
- 12: - Luft
- 13: - Abgas
- 14, 14': - Kathode
- 15: - Brennstoffabschnitt
- 16: - Gasfördereinrichtung
- 17: - Anodengasabschnitt
- 18: - Aufteilungseinrichtung
- 19: - Leitung für weiteres Medium

## Patentansprüche

1. Gaskreislauf (7) für ein Festoxidbrennstoffzellen-System (1), welcher einen Anodengasabschnitt (17), in welchem aus einem Gasraum einer Anode (3) einer Festoxidbrennstoffzelle (4) austretendes Anodengas fließt, und einen Rezirkulationsabschnitt (9) zum Rezirkulieren zumindest eines Teils des Anodengases zurück zu einer in dem Gaskreislauf (7) angeordneten Brenngasaufbereitungseinrichtung (2), in welcher Brennstoff für die Festoxidbrennstoffzelle (4) zu Brenngas aufbereitet wird, aufweist, wobei in dem Gaskreislauf (7) eine Fördereinrichtung (16) zum Rezirkulieren des Anodengases, und eine Aufteilungseinrichtung (18), die das Anodengas in einen Rezirkulationsstrom und einen aus dem Gaskreislauf (7) abzuleitenden Restgasstrom aufteilt, angeordnet sind, wobei die Fördereinrichtung (16) stromaufwärts der Aufteilungseinrichtung (18) in dem Anodengasabschnitt (17) angeordnet ist, **dadurch gekennzeichnet, dass** dem Rezirkulationsstrom in dem Rezirkulationsabschnitt (9) ein weiteres Medium, wie Wasser oder Wasserdampf, über eine in den Rezirkulationsabschnitt (9) mündende Leitung (19) mittels eines Ejektors, einer Düse oder eines Strahlwäschers zugeführt wird.

2. Gaskreislauf (7) gemäß Anspruch 1, **dadurch gekennzeichnet, dass** die Fördereinrichtung (16) ein Gebläse ist.

3. Gaskreislauf (7) gemäß Anspruch 1, **dadurch gekennzeichnet, dass** die Fördereinrichtung (16) ein Ejektor ist.

4. Gaskreislauf (7) gemäß einem der Ansprüche 1 bis 3, **dadurch gekennzeichnet, dass** die Brenngasaufbereitungseinrichtung (2) einen Reformer umfasst.

5. Gaskreislauf (7) gemäß einem der Ansprüche 1 bis 4, **dadurch gekennzeichnet, dass** die Brenngasaufbereitungseinrichtung (2) zum Durchführen der Brenngasaufbereitung bei unterschiedlichen Temperaturen, bei unterschiedlichen Drücken und/oder mit unterschiedlichen Katalysatoren ausgelegt ist.

6. Gaskreislauf (7) gemäß einem der Ansprüche 1 bis 5, **dadurch gekennzeichnet, dass** die Brenngasaufbereitungseinrichtung (2) Einrichtungen zum Durchführen einer partiellen Oxidation, einer autothermen Reformierung oder einer Wasserdampfreformierung aufweist.

7. Gaskreislauf (7) gemäß einem der Ansprüche 1 bis 6, **dadurch gekennzeichnet, dass** die Brenngasaufbereitungseinrichtung (2) eine Entschwefelungseinrichtung aufweist.

8. Gaskreislauf (7) gemäß einem der Ansprüche 1 bis 7, **dadurch gekennzeichnet, dass** der Restgasstrom einer Oxidationseinheit (10) mit einem Restgasbrenner zum Oxidieren des Restgases mit Luft oder Sauerstoff zuführbar ist.

9. Gaskreislauf (7) gemäß einem der Ansprüche 1 bis 8, **dadurch gekennzeichnet, dass** der Gaskreislauf (7) weiterhin einen Brenngasabschnitt (15) aufweist, welcher von der Brenngaseinrichtung (2) zum Gasraum der Anode (3) führt.

10. Festoxidbrennstoffzellen-System (1), welches zumindest eine Festoxidbrennstoffzelle (4, 4') und einen Gaskreislauf (7) gemäß einem der Ansprüche 1 bis 9 umfasst.

## Claims

1. Gas circuit (7) for a solid oxide fuel cell system (1) which comprises an anode gas segment (17) in which an anode gas exiting from a gas space of an anode (3) of a solid oxide fuel cell (4) flows, and a recirculation segment (9) for recirculating at least a part of the anode gas back to a combustion gas processing appliance (2) arranged in the gas circuit (7) and in which fuel is processed to combustion gas for the solid oxide fuel cell (4), wherein a conveying appliance (16) for recirculating the anode gas, and a division appliance (18) that divides the anode gas into a recirculation stream and a residual gas stream to be discharged from the gas circuit (7), are arranged in the gas circuit (7), wherein the conveying appliance (16) is arranged upstream of the division appliance (18) in the anode gas segment (17) **characterized in that** a further medium, such as water or steam, is fed to the recirculation stream in the recirculation segment (9) via a line (19) opening out into the recirculation segment (9) by means of an ejector, a nozzle or a jet scrubber.

2. Gas circuit (7) according to Claim 1, **characterized in that** the conveying appliance (16) is a blower.

3. Gas circuit (7) according to Claim 1, **characterized in that** the conveying appliance (16) is an ejector.

4. Gas circuit (7) according to any one of Claims 1 to 3, **characterized in that** the combustion gas processing appliance (2) comprises a reformer.

5. Gas circuit (7) according to any one of Claims 1 to 4, **characterized in that** the combustion gas processing appliance (2) is designed to carry out the combustion gas processing at differing temperatures, at differing pressures and/or using differing catalysts.

6. Gas circuit (7) according to any one of Claims 1 to 5, **characterized in that** the combustion gas processing appliance (2) comprises appliances for carrying out partial oxidation, an autothermal reforming or a steam reforming.

7. Gas circuit (7) according to any one of Claims 1 to 6, **characterized in that** the combustion gas processing appliance (2) comprises a desulfurizing appliance.

8. Gas circuit (7) according to any one of Claims 1 to 7, **characterized in that** the residual gas stream is feedable to an oxidation unit (10) having a residual gas burner for oxidizing the residual gas with air or oxygen.

9. Gas circuit (7) according to any one of Claims 1 to 8, **characterized in that** the gas circuit (7) additionally comprises a combustion gas segment (15) which leads from the combustion gas appliance (2) to the gas space of the anode (3).

10. Solid oxide fuel cell system (1) which comprises at least one solid oxide fuel cell (4, 4') and a gas circuit (7) according to any one of Claims 1 to 9.

## Revendications

1. Circuit de gaz (7) pour un système (1) de piles à combustible à oxyde solide, le circuit comportant
une section (17) à gaz d'anode dans laquelle s'écoule un gaz d'anode sortant de l'espace de gaz d'une anode (3) d'une pile à combustible (4) à oxyde solide et
une section de recirculation (9) qui renvoie au moins une partie du gaz d'anode dans un dispositif (2) de préparation de gaz combustible disposé dans le circuit de gaz (7), dispositif dans lequel un combustible pour la pile à combustible (4) à oxyde solide est préparé sous forme de gaz combustible,
un dispositif de transport (16) qui met en circulation le gaz d'anode et un dispositif de répartition (18) qui divise le gaz d'anode en un écoulement de recirculation et un écoulement de gaz résiduel à évacuer hors du circuit de gaz (7) étant disposés dans le circuit de gaz (7),
le dispositif de transport (16) étant disposé dans la section (17) à gaz d'anode en amont du dispositif de répartition (18) dans la direction d'écoulement, **caractérisé en ce que**
au moyen d'un éjecteur, d'une tuyère ou d'un laveur à jet, un autre fluide, à savoir de l'eau ou de la vapeur d'eau, est apporté dans l'écoulement de recirculation au niveau de la section de recirculation (9) par un conduit (19) qui débouche dans la section de recirculation (9).

2. Circuit de gaz (7) selon la revendication 1, **caractérisé en ce que** le dispositif de transport (16) est un ventilateur.

3. Circuit de gaz (7) selon la revendication 1, **caractérisé en ce que** le dispositif de transport (16) est un éjecteur.

4. Circuit de gaz (7) selon l'une des revendications 1 à 3, **caractérisé en ce que** le dispositif (2) de préparation de gaz combustible comprend un reformeur.

5. Circuit de gaz (7) selon l'une des revendications 1 à 4, **caractérisé en ce que** le dispositif (2) de préparation de gaz combustible est conçu pour réaliser la préparation du gaz combustible à différentes températures, à différentes pressions et/ou à l'aide de différents catalyseurs.

6. Circuit de gaz (7) selon l'une des revendications 1 à 5, **caractérisé en ce que** le dispositif (2) de préparation de gaz combustible présente des dispositifs permettant de réaliser une oxydation partielle, un reformage autotherme ou un reformage de vapeur d'eau.

7. Circuit de gaz (7) selon l'une des revendications 1 à 6, **caractérisé en ce que** le dispositif (2) de préparation de gaz combustible présente un dispositif de désoufrage.

8. Circuit de gaz (7) selon l'une des revendications 1 à 7, **caractérisé en ce que** l'écoulement de gaz résiduel peut être apporté à une unité d'oxydation (10) dotée d'un brûleur à gaz résiduel qui oxyde le gaz résiduel à l'aide d'air ou d'oxygène.

9. Circuit de gaz (7) selon l'une des revendications 1 à 8, **caractérisé en ce que** le circuit de gaz (7) présente en outre une section (15) de gaz combustible qui relie le dispositif (2) de gaz combustible à l'espace de gaz de l'anode (3).

10. Système (1) de piles à combustible à oxyde solide présentant au moins une pile à combustible (4, 4') à oxyde solide et un circuit de gaz (7) selon l'une des revendications 1 à 9.
